# FASCICULE DE BREVET EUROPEEN

(11) **EP 0 493 282 B1**
(45) Date de publication et mention de la délivrance du brevet: **12.10.1994**
(21) Numéro de dépôt: 91430030.6
(22) Date de dépôt: 17.12.1991
(51) Int. Cl.: B60S 3/00

(54) **Dispositif flexible d'aspiration globale de volume pour le nettoyage automatique de véhicules**
Flexibles Ansaugsystem zum automatischen Reinigen des gesamten Innenraums von Fahrzeugen
Flexible suction device for the automatic cleaning of entire vehicles

(30) Priorité: 28.12.1990 FR 9016624
(43) Date de publication de la demande: 01.07.1992
(73) Titulaire: ONET Société Anonyme, 13008 Marseille (FR)
(72) Inventeur: Pacchiani, Louis, F-13540 Puyricard (FR)
(74) Mandataire: Moretti, René

(56) Documents cités:
- EP-A- 0 163 792
- GB-A- 1 133 599
- GB-A- 1 255 013
- US-A- 4 473 409

## Description

La présente invention a pour objet un dispositif flexible d'aspiration globale pour le nettoyage automatique de véhicules.

Le secteur technique de l'invention est le domaine de la fabrication des systèmes d'aspiration de poussières et de détritus salissant le volume intérieur des véhicules comportant au moins deux ouvertures.

Une des applications principales de l'invention est le nettoyage de l'intérieur de véhicules tels que les cars, autocars et trains transportant régulièrement de nombreuses personnes.

On connaît en effet différents types de procédés et de dispositifs permettant un tel nettoyage: le plus connu et le plus classique est l'utilisation de balais et d'aspirateurs manipulés par du personnel qui se déplace à l'intérieur du véhicule; compte tenu de la surface intérieure en général assez grande à nettoyer et des nombreux obstacles tels que les supports de sièges ou des barres de retenue, il faut beaucoup de personnel si on ne veut pas immobiliser le véhicule trop longtemps. Pour réduire ce temps d'immobilisation et permettre d'effectuer ces opérations de nettoyage quand les véhicules ne sont pas utilisés tel que la nuit par exemple ou pendant qu'on effectue d'autres opérations, tout en réduisant le personnel nécessaire, divers fabricants et utilisateurs ont développé des systèmes d'aspiration, que l'on peut qualifier de globale, en provoquant et utilisant un courant d'air assez violent entre les deux ouvertures du véhicule et capable d'évacuer vers l'une de celles-ci tous les déchets et poussières situés dans le volume balayé par ce courant d'air.

Ainsi on relève parmi les systèmes ayant fait l'objet de dépôts de demande de brevet, une des publications les plus anciennes, dont la demande a été déposée aux U.S.A. le 14 Septembre 1951 sous le N° US-A-2 677 629 par Monsieur William BUCK sur un "procédé de nettoyage de l'intérieur des véhicules, des constructions et autres": ce document enseigne un dispositif d'aspiration, qu'on fixe étanche contre une porte d'un autocar avec une ouverture au niveau du plancher, et qui par un conduit d'aspiration évacue les déchets lourds dans un bac situé en-dessous de ce conduit et les déchets légers dans un tamis situé en hauteur derrière un ventilateur d'aspiration; par ailleurs un opérateur dirige des jets d'air comprimé vers les zones où peuvent se trouver des poussières et des déchets à l'intérieur de l'autocar pour les dégager et aider leur aspiration vers le dispositif précédent.

On note également deux demandes de brevets déposées en Angleterre par M. Ronald COX les 6 Juin 1962 et 10 Décembre 1963 suivant les N° respectifs GB-A-970 088 et GB-A-1 025 659 concernant "des dispositifs pneumatiques de nettoyage de l'intérieur de véhicules": ces documents décrivent essentiellement des systèmes adaptés à des cars à deux étages et à des wagons, dans lesquels une turbine souffle un important débit d'air à travers un conduit qui vient s'adapter autour d'un des accès et qui évacue les déchets en les poussant vers une autre ouverture comportant un système de récupération de ceux-ci, l'ensemble des autres ouvertures étant obturées.

Le brevet US-A-4 115 896 déposé le 5 Décembre 1977 par Dean COSTANZO décrit également un "système de nettoyage de l'intérieur de véhicules" grâce à un ventilateur d'aspiration relié à un conduit dont l'extrémité est plaquée autour de la porte d'un bus mais dont l'ouverture est limitée au niveau du plancher comme dans le premier document cité, et dont la particularité porte sur la disposition du conduit d'aspiration qui crée un courant d'air en couronne autour du ventilateur afin de centrifuger les poussières et les déchets qui sont recueillis dans une chambre ce compactage placée à la base du système et ne passent donc pas à travers le ventilateur.

Enfin on peut citer la demande de brevet FR-A-2 536 713 déposée le 13 Novembre 1982 par la Société NETTOBUS SARL sur "un procédé et appareil de nettoyage de véhicules" (ou voir encore EP-A-0 163 792 qui lui correspond): ce document enseigne en fait un dispositif compact, comprenant comme certains appareils décrits dans les documents précédents, un ventilateur d'aspiration relié directement à un conduit plaqué contre une porte d'entrée du véhicule divers bacs de récupération de déchets lourds au niveau de la cloison inférieure du conduit, et des filtres pour les déchets légers à la partie supérieure, avant le ventilateur placé au-dessus. Ceci correspond en fait à divers enseignements et documents précédents sans rien apporter de nouveau, mais il est intéressant de le noter car il représente et rassemble l'état de la technique connu à ce jour en ce domaine.

Ainsi il est bien connu de pouvoir nettoyer les volumes intérieurs de véhicules en créant un fort courant d'air à l'intérieur grâce à un dispositif d'adaptation d'un conduit d'aspiration autour d'une ouverture du véhicule, et différents ventilateurs, bacs et filtres: il est préconisé également d'utiliser des systèmes capables d'assurer un débit de l'ordre de, au moins 50.000 M³/heure pour avoir une bonne efficacité de nettoyage, ce qui correspond à un vent soufflant dans le véhicule à une vitesse de l'ordre de 25 à 30 KM/H.

Différents équipements ont ainsi été réalisés suivant la description ci-dessus et certains donnent satisfaction suivant l'application concernée. Cependant compte tenu du débit demandé, les moteurs de ventilation et les turbines sont assez importants et sont donc bruyants, de plus l'évacuation de l'air pose des problèmes de nuisance pour le personnel à proximité quand celui-ci doit assurer d'autres interventions sur ou autour du véhicule.

Compte tenu des grandes dimensions de ces dispositifs, les utilisateurs les placent préférentiellement souvent à l'extérieur des bâtiments ce qui limite les possibilités de réaliser d'autres opérations en temps masqué pendant ce nettoyage, et expose le matériel aux intempéries surtout pour ceux, dont le dernier cité ci-dessus, qui évacuent de par leur conception l'air à la verticale vers le haut.

Pour éviter ces inconvénients, l'utilisateur peut vouloir les installer dans des bâtiments, mais alors les nuisances dues au bruit et au courant d'air sont importantes, sauf à détourner les évacuations vers l'extérieur et à installer des silencieux, ce qui se fait effectivement dans certains cas, mais diminue les performances des systèmes. De toutes façons les dimensions des appareils en limitent énormément les possibilités d'implantation dans des locaux déjà prévus pour d'autres opérations; quant à réaliser des locaux spécialement adaptés compte tenu des dimensions nécessaires, cela est difficilement envisageable et coûterait trop cher aux utilisateurs.

Le problème posé est donc de pouvoir assurer un nettoyage du volume intérieur de véhicules par une aspiration globale, suivant le procédé général connu depuis plus de trente ans et tel que rappelé ci-dessus, et utilisant des dispositifs également connus de ventilation, de filtrage et d'adaptation étanche contre les portes des véhicules, mais permettant une utilisation adaptée à des endroits existants qui peuvent être des locaux fermés et dans lesquels la surface disponible et la place sont limitées, un fonctionnement avec un minimum de nuisance sonore dans ces endroits, et une plus grande souplesse d'installation avec d'autres postes d'intervention sur les véhicules.

Une solution au problème posé est un dispositif flexible d'aspiration globale de volume d'air pour le nettoyage de véhicules disposant d'au moins deux ouvertures et comportant un système d'aspiration pouvant entourer au moins une des ouvertures du véhicule positionné sur un emplacement d'intervention et monté sur un bâti délimitant l'extrémité d'un conduit d'aspiration débouchant verticalement à la partie supérieure du bâti avec une grille d'arrêt des déchets légers et volumineux, et raccordé à un dispositif de ventilation à travers des vitres (Voir EP-A-0 1 633 792 ou FR-A-2 536 713), caractérisé en ce que ledit conduit d'aspiration comporte une gaine passant au-dessus dudit emplacement et débouchant dans un lieu assez éloigné de celui où se trouve ledit emplacement, lequel conduit est alors raccordé verticalement à la partie supérieure d'un bâti recevant ledit dispositif de ventilation qui rejette l'air aspiré dans le véhicule vers le bas.

Préférentiellement la largeur dudit bâti et du système d'adaptation est inférieure à celle des terre-pleins techniques séparant deux véhicules dans tout atelier permettant des interventions techniques d'entretien quotidiennes de ces véhicules.

Dans un mode particulier de réalisation le dispositif de ventilation et son bâti sont montés dans un container mobile qui peut être raccordé audit conduit pour les opérations de nettoyage par aspiration du véhicule, et déconnecté pour être transporté et utilisé sur un autre lieu pour le nettoyage d'autres véhicules.

Dans un autre mode de réalisation préférentiel le dispositif comprend un capteur fixe placé à proximité du dispositif d'adaptation aux ouvertures du véhicule, permettant d'identifier celui-ci grâce à toute balise embarquée qui lui est propre, et raccordé à toute unité centrale de gestion déportée.

Préférentiellement le système de gestion est raccordé également à tout autre dispositif de contrôle et d'opération d'entretien quotidien des véhicules placé à proximité dudit bâti et du système d'adaptation afin de pouvoir effectuer plusieurs interventions sur le même véhicule en même temps et d'assurer le suivi de ce véhicule dont les données et les caractéristiques de toutes lesdites interventions sont stockées dans une mémoire de système de gestion.

Le résultat est de nouveaux dispositifs d'aspiration de volume pour le nettoyage de véhicules qui répondent aux objectifs recherchés et aux divers inconvénients cités précédemment pour les systèmes connus existants. En effet, les dispositifs suivant l'invention permettent en particulier d'adapter ceux-ci à tous locaux existants et recevant des véhicules de transport pour effectuer par exemple leur plein de carburant: en général ces locaux disposent de terre-pleins d'accès sous forme d'îlots de 2 mètres de large maximum quine permettent pas toujours de recevoir les dispositifs actuels, alors que ceux suivant l'invention peuvent y être installés en ce qui concerne le bâti d'extrémité du conduit d'aspiration et son système d'adpatation aux ouvertures des véhicules.

Par ailleurs le fait de déporter les dispositifs de ventilation permet de déporter leurs nuisances dues aux bruits et aux courants d'air car d'une part leur éloignement est un facteur de réduction de ces nuisances et d'autre part on peut alors mieux isoler le local où ils sont situés.

Un autre intérêt de ce déport d'une partie de l'installation est de pouvoir alors la rendre
- d'une part mobile dans un container qui peut être déplacé d'un site à un autre grâce par exemple à un camion-plateau, permettant de réduire ainsi suivant le cas les investissements,
- et d'autre part, standard car souvent les systèmes d'adaptation doivent être conformes à divers types de véhicules qui n'ont pas tous les mêmes ouvertures, alors que le dispositif de ventilation assurant un débit donné peut être alors identique à différents types d'installation.

De plus la disposition particulière de ce dispositif de ventilation recevant l'air par le conduit d'aspiration arrivant verticalement par le dessus contrairement à la plupart des dispositifs actuels recevant et aspirant l'air par le dessous ou par le côté, permet d'une part de maintenir simplement par gravité les poussières aspirées dans les filtres, pouvant être placés alors au-dessus des ventilateurs proprement dits, et d'autre part de rejeter l'air par un orifice placé en-dessous du dispositif donc à l'abri des intempéries.

Enfin les dispositifs suivant l'invention peuvent être ainsi mis en oeuvre sur des terre-pleins ou îlots recevant d'autres postes d'intervention techniques tels que des bornes de distribution de carburant ou des postes de gonflage de pneumatiques; il est alors possible d'effectuer toutes les opérations en même temps donc de gagner en temps d'immobilisation du véhicule et en place d'atelier et de parking. L'ensemble de ces opérations pouvant être automatisé, contrôlé et géré par une unité centrale, apporte une combinaison nouvelle qui peut être intégrée du reste sur un seul bâti, et bien adaptée à l'amélioration de l'organisation et de la gestion de parcs de véhicules de transport.

On pourrait citer d'autres avantages de la présente invention mais ceux cités ci-dessus en montrent déjà suffisamment pour en démontrer la nouveauté et l'intérêt. La description et les figures ci-après représentent des exemples de réalisations de l'invention mais n'ont aucun caractère limitatif: d'autres réalisations sont possibles à partir des revendications qui précisent la portée et l'étendue de cette invention, en particulier en disposant les bâtis d'aspiration et de ventilation en des endroits différents ou suivant des combinaisons d'intégration de plusieurs dispositifs d'aspiration par rapport à plusieurs dispositifs de ventilation suivant les besoins de l'utilisateur.

La figure 1 est une vue de profil en coupe partielle d'un exemple du dispositif suivant l'axe de circulation des véhicules.

La figure 2 est une autre vue de profil en coupe partielle d'un autre exemple du dispositif suivant l'axe de circulation des véhicules.

La figure 3 est une vue de dessus d'un ensemble d'un exemple de dispositif.

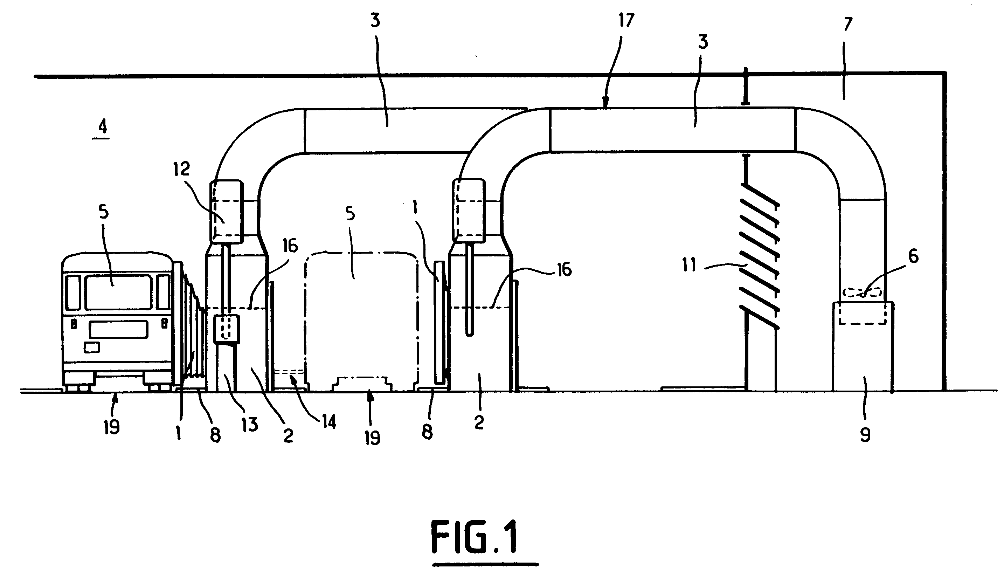

La figure 1 est une vue de profil en coupe partielle d'un exemple d'un dispositif installé ici à l'intérieur d'un local 4 fermé où circulent des véhicules 5 entre des îlots ou terre-pleins techniques 8.

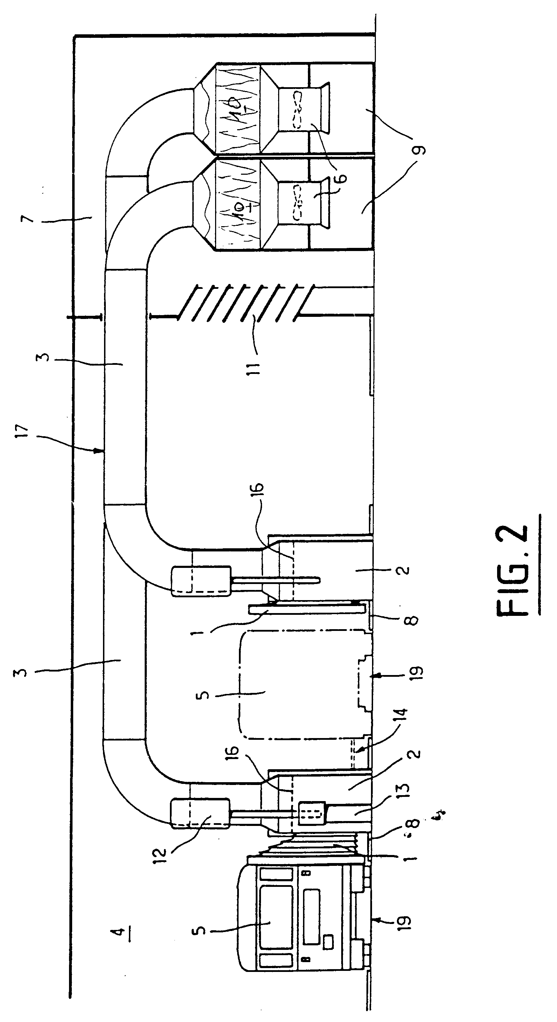

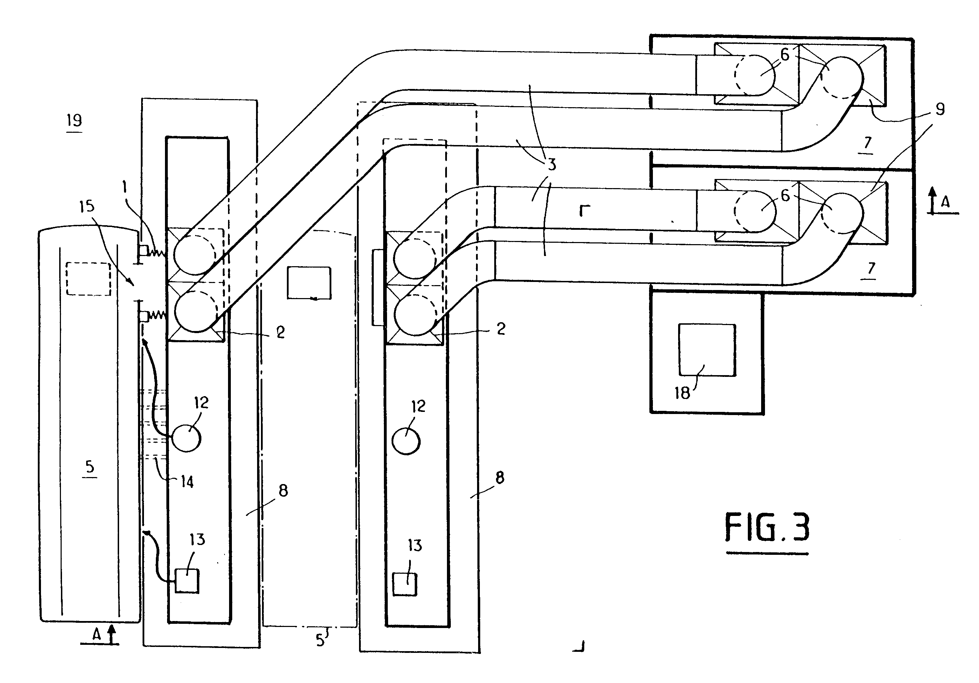

La figure 1 comme la figure 2 sont en fait des vues en coupe partielle telles que représentées sur la figure 3 suivant la ligne en coupe AA. Dans ces figures 1 à 3, des exemples de réalisation du dispositif suivant l'invention sont représentés dans des locaux fermés 4 et 7, mais dans d'autres possibilités de réalisation, ces locaux peuvent être des endroits ouverts ou semi-ouverts avec des isolations plus ou moins importantes et adaptées aux besoins de la société de transport. Dans ces figures, on a également représenté des autocars 5 mais ces véhicules de transport pourraient être également des trains ou des rames, de type métro, ou tout autre véhicule de volume important et pouvant venir se déplacer en face des stations d'aspiration telles que décrites ci-après.

De même, il a été représenté dans les figures 1 à 3 des stations d'aspiration fixes avec le véhicule qui se met en place devant elles, mais l'inverse peut être envisagé avec des véhicules à l'arrêt et un déplacement des systèmes d'adaptation et de leur bâti grâce à une flexibilité des conduits et des systèmes d'alimentation.

Le dispositif d'aspiration globale suivant l'invention comprend dans tous ces exemples de réalisation et tel que cela est réalisé dans tout système connu à ce jour, d'une part un système d'adaptation 1 pouvant entourer au moins une des ouvertures 15 des véhicules 5 que l'on doit nettoyer, et monté sur un bâti 2 délimitant l'extrémité d'un conduit d'aspiration 3 raccordé à un dispositif de ventilation 6 à travers des filtres 10 ou 16. En général ces dispositifs sont intégrés sur un seul bâti de façon à réduire les pertes de charges et permettre de réaliser un ensemble compact directement accessible à côté des véhicules à nettoyer.

Dans la présente invention le dispositif est séparé en deux ensembles situés en des endroits différents et reliés par un conduit: d'un côté ledit conduit 3 est fixé verticalement à la partie supérieure du bâti 2 avec une grille d'arrêt 16 de tout type connu pour les déchets légers ou volumineux restant alors prisonniers de l'intérieur du bâti 2, et cedit bâti reçoit également les déchets lourds qui restent posés contre la cloison inférieure et qui peuvent être recueillis dans tous types de bacs, ceux-ci étant ensuite vidés à intervalle régulier tel que cela est connu par ailleurs (Voir, par exemple, US-A-2 677 629 ou FR-A-2 536 713 ou EP-A-0 163 792).

Le conduit 3 comporte ensuite une gaine 17 passant au-dessus dudit véhicule 5 et de ceux qui peuvent être situés à proximité et débouche dans un lieu 7 assez éloigné de celui 4 où se trouve le véhicule 5. lequel conduit 3 y est alors raccordé verticalement à la partie supérieure d'un bâti 9 recevant ledit dispositif de ventilation 6 qui rejette l'air aspiré dans le véhicule vers le bas.

Sur cette figure 1 on a représenté deux ensembles de bâtis de conduits d'aspiration 2 et un seul bâti et ensemble de ventilation 6 situé dans le local 7. D'autres combinaisons sont possibles tels que représentés par exemple sur la figure 3 ou sur la figure 2. En effet, le dispositif suivant l'invention peut comporter plusieurs bâtis 2 et systèmes d'adaptation 1 aux ouvertures des véhicules 5 qui sont raccordés à un seul bâti 9 supportant un dispositif de ventilation 6 assurant le débit nécessaire à l'ensemble du dispositif d'aspiration tel que représenté sur cette figure 1.

Dans ces figures 1 à 3 on a également représenté à titre d'exemple mais non limitatif le lieu 7 recevant le dispositif de ventilation 6 comme un local isolé et fermé par rapport au lieu 4 où se trouve les véhicules 5 et les bâtis 2 supports d'extrémité 1, lequel local 7 dispose d'une aération 11 qui peut être latérale permettant l'évacuation de l'air aspiré. Cette aération 11 peut communiquer directement avec l'extérieur mais dans les cas où la température extérieure peut être très différente de la température intérieure du local, afin d'éviter et de limiter les déperditions caloriques, l'aération peut communiquer directement avec le local fermé 4 après le filtrage et le dépôt de toutes poussières d'aspiration dans le local 7: un dispositif particulier d'isolation phonique est alors nécessaire tel que représenté sur cette figure 1, avec des conduits de type "claustras" inclinés 11 permettant le renouvellement de l'air dans le local 4 et la circulation en circuit fermé entre ces deux locaux et les conduits d'aspiration 3.

Dans un autre mode de réalisation non représentée dans les figures, l'ouverture d'aération et de refoulement 11 du local 7 où se situe le dispositif de ventilation 6 peut être raccordée et reliée par un conduit, en réseau fermé par rapport au local 4 et éventuellement de l'autre côté directement depuis la sortie du dispositif de ventilation 6, à une autre ouverture 15 du véhicule 5, sur lequel est connecté le système d'aspiration 1, grâce à un autre système d'adaptation. On obtient ainsi un circuit fermé d'aspiration/refoulement/nettoyage qui est bouclé sur le véhicule et quine perturbe en aucune manière le lieu et l'endroit où se situe le véhicule 5.

Une de ses principales caractéristiques est que la largeur dudit bâti 2 et du système d'adaptation 1 est inférieure à celle du terre-plein technique 8 séparant deux véhicules 5 dans tout atelier 4, permettant des interventions techniques d'entretien quotidiennes de ces véhicules sur des emplacements 19 disposés entre cesdits terre-pleins et sur lesquels s'avancent lesdits véhicules 5 jusqu'à leur position d'intervention. Ces îlots ou terre-pleins 8 sont de largeur suffisante en général pour permettre l'ouverture des coffres à bagages 14, permettant de nettoyer par exemple ceux-ci, mais également de pouvoir recevoir des bornes d'alimentation en carburant 13 ou des postes de gonflage de pneumatiques 13. On peut envisager également d'autres types de postes d'intervention placés sur cet îlot ou même intégrés au bâti du système d'aspiration 2.

Les systèmes d'adaptation 1 aux ouvertures des véhicules 5 peuvent être de tous types, de type soufflet ou autre dispositif télescopique permettant le déplacement entre la position fermée telle que représentée sur le bâti de droite sur la figure 1 et la position d'ouverture et donc d'étanchéité contre le véhicule 5 telle que représentée sur le bâti de gauche sur la figure 1.

Ledit système d'adaptation 1 peut être monté suspendu par rapport au bâti 2 afin de permettre un déplacement relatif dans le sens longitudinal du véhicule 5 pour bien centrer ce système 1 par rapport à l'ouverture 15, tout en assurant l'accès pour d'autres dispositifs 12 et 13 tels que définis ci-dessus d'intervention sur d'autres points du véhicule 5 et tels que représentés en vue du dessus sur la figure 3.

Dans un autre mode de réalisation et suivant le type d'exploitation envisagé tel que décrit précédemment, le dispositif de ventilation 6 et son bâti 9 peuvent être montés dans un container mobile qui peut être raccordé audit conduit 3 pour les opérations de nettoyage par aspiration du véhicule 5 et déconnecté pour être transporté et utilisé sur un autre lieu 7 pour le nettoyage d'autres véhicules. La connexion peut être faite soit dans une partie du conduit 3 horizontal, ou dans une partie verticale, suivant l'endroit où l'on veut placer la bride de raccordement entre les deux parties du conduit que l'on sépare alors. l'une restant solidaire de la gaine fixe 17, et l'autre solidaire du bâti mobile de ventilation 6.

Sur la figure 1 le dispositif est représenté le plus dépouillé possible mais il peut être rajouté dans ce dispositif au-dessus de la grille 16 d'arrêt de déchets légers, des filtres à poussières qui sont alors intégrés au bâti 2 et donc renouvelés à cet endroit-là pour être nettoyés. Dans une autre version telle que représentée sur la figure 2 les filtres 10 à poussières sont situés au-dessus des ventilateurs 6 sur les bâtis 9. Cette solution sera préférentiellement retenue chaque fois que le débit important nécessitera des filtres volumineux ne pouvant pas être installés sur les bâtis d'aspiration 2, de même cette disposition intégrée dans le système de ventilation permet leur nettoyage et leur accessibilité dans le local 7 d'une façon plus aisée que dans le local 4 où on limitera les interventions à l'évacuation de déchets lourds et/ou légers et volumineux qui seront retombés dans les bacs situés dans le bâti 2 et tels que rappelés précédemment. En dehors de ces différences de disposition des filtres, et de disposition d'un ou de plusieurs bâtis et systèmes d'aspiration 6 en relation avec un ou plusieurs bâtis et systèmes d'aspiration 2, les dispositifs suivant l'invention de la figure 1 et de la figure 2 comportent les mêmes autres éléments essentiels.

La figure 3 est une vue de dessus d'ensemble d'un exemple de dispositif tel que pourrait l'être par exemple celui de la figure 2 dans lequel on retrouve des différentes parties des dispositifs, telles que le bâti 2 portant l'extrémité du conduit 3 et le système d'adaptation 1 sur l'entrée des ouvertures 15 des véhicules 5, ainsi qu'à l'autre extrémité des conduits 3, les bâtis 9 de support de système de ventilation 6 situé dans un local 7. Dans cet exemple de la figure 3, on a représenté deux systèmes de ventilation 6 pour un seul bâti d'aspiration 2. Cette disposition est particulièrement adaptée pour les grands véhicules 5 tels que les cars articulés ou les grands wagons de chemin de fer. Ce dispositif permet d'assurer des débits de l'ordre de 100.000 M³/heure, ce qui est possible avec des puissances installées d'environ et au plus 90 chevaux, par exemple en deux fois 45 chevaux, et assurant une vitesse à l'intérieur des compartiments des véhicules 5 de l'ordre de 15 mètres/seconde avec une section de compartiment de l'ordre de 6 M². Les conduits ou gaines 3 de liaison entre les différents bâtis peuvent être des conduits de l'ordre de 1 mètre de diamètre sur des longueurs pouvant atteindre de 10 à 25 mètres.

Le dispositif suivant l'invention peut comprendre un capteur 14 fixe placé à proximité du dispositif d'adaptation 1 aux ouvertures du véhicule 5, permettant d'identifier celui-ci grâce à toute balise embarquée qui lui est propre, et raccordé à toute unité centrale 18 de gestion déportée par exemple située dans un local adjacent au local 7
Ledit système de gestion 18 peut être raccordé également à tout autre dispositif de contrôle et d'opérations d'entretien quotidiennes desdits véhicules 5, tels que les systèmes de fourniture de gas-oil 13 ou de fourniture de gaz comprimé pour le gonflage des pneumatiques 12. Cet ensemble de systèmes coordonnés par un seul système de gestion permet de pouvoir effectuer plusieurs interventions sur le même véhicule en même temps et d'assurer le suivi de ce véhicule 5, dont toutes les données et caractéristiques desdites interventions sont alors stockées dans des mémoires du système de gestion 18. Ce système, raccordé à un réseau de communication, peut informer à distance et donner l'état de bon fonctionnement global du système. De plus il peut prévenir en cas d'anomalie et fournir une alarme permettant un télédiagnostic et/ou le déclenchement d'une opération de maintenance.

Lesdits capteurs de reconnaissance d'identification 20 peuvent être des capteurs à infra-rouge ou à laser ou à hyper-fréquence ou des boucles magnétiques situés dans le sol tels que représentés sur cette figure 3. Le système de gestion des carburants peut être associé à un système de remplissage automatique dudit carburant effectué donc en temps masqué pendant les opérations de nettoyage grâce au dispositif suivant l'invention.

L'unité de gestion peut comporter également un écran d'informations qui affiche au conducteur dudit véhicule 5, lequel est identifié en arrivant au poste de nettoyage et d'entretien 19, les informations de gestion propres au véhicule et/ou des ordres de planification des opérations de maintenance à venir, tels que des maintenances mécaniques ou des petits lavages ou grands lavages ou des vidanges etc: ceci permet une planification du parc de véhicules de transport d'une façon automatisée et contrôlée avec éventuellement un clavier d'entrée d'informations pour que le conducteur du véhicule puisse dialoguer avec l'unité de gestion, suivant le type de gestion envisagée, des données peuvent introduites par ce clavier tel qu'en particulier les kilomètres du véhicule, et dans d'autres installations déduites et intégrées dans le capteur d'identification placé au sol 14.

Comme le passage à un poste de remplissage de carburant est un passage obligé quotidiennement, on peut ainsi nettoyer tous les jours également et informer à partir de ces points les conducteurs desdits véhicules 5 pour qu'ils amènent ceux-ci à différentes stations pour y effectuer d'autres opérations plus importantes et non réalisables sur les îlots 8.

Afin d'améliorer les possibilités de nettoyage à l'intérieur des bus en dehors du système de ventilation générale et globale, le dispositif peut comporter également au moins une tourelle orientable portant un dispositif de projection de jet d'air comprimé situé à l'intérieur et à poste fixe dans ledit véhicule 5 raccordé en même temps que la mise en place du système d'adaptation 1 audit dispositif d'aspiration comportant alors un réseau d'air comprimé et commandé alors pour diriger le jet d'air vers les endroits d'accès difficile du véhicule. Cette commande peut être télécommandée et le raccordement automatique.

## Revendications

1. Dispositif flexible d'aspiration globale de volume d'air pour le nettoyage de véhicules disposant d'au moins deux ouvertures, comportant un système d'aspiration (1) pouvant entourer au moins une des ouvertures (15) du véhicule (5) positionné sur un emplacement (19) d'intervention et monté sur un bâti (2) délimitant l'extrémité d'un conduit d'aspiration (3) débouchant verticalement à la partie supérieure dudit bâti (2) avec une grille d'arrêt (16) des déchets légers et volumineux, et raccordé à un dispositif de ventilation (6) à travers des filtres (10, 16), caractérisé en ce que ledit conduit d'aspiration (3) comporte une gaine (17) passant au-dessus dudit emplacement (19) et débouchant dans un lieu (7) assez éloigné de celui (4) où se trouve ledit emplacement (19), lequel conduit (3) est alors raccordé verticalement à la partie supérieure d'un bâti (9) recevant ledit dispositif de ventilation (6) qui rejette l'air aspiré dans le véhicule (5) vers le bas.

2. Dispositif d'aspiration suivant la revendication 1, caractérisé en ce que la largeur dudit bâti (2) et du système d'adaptation (1) est inférieure à celle des terre-pleins techniques (8) séparant deux véhicules (5) dans tout atelier (4) permettant des interventions techniques d'entretien quotidiennes de ces véhicules.

3. Dispositif d'aspiration selon l'une quelconque des revendications 1 et 2, caractérisé en ce que le lieu (7) recevant le dispositif de ventilation (6) est un local isolé et fermé par rapport au lieu (4) où se trouve le véhicule (5) et le bâti (2) support d'extrémité (1), lequel local (7) dispose d'une aération (11) permettant l'évacuation de l'air aspiré.

4. Dispositif d'aspiration selon l'une quelconque des revendications 1 à 3, caractérisé en ce que le dispositif de ventilation (6) et son bâti (9) sont montés dans un container mobile, qui peut être raccordé audit conduit (3) pour les opérations de nettoyage par aspiration du véhicule (5), et déconnecté pour être transporté et utilisé sur un autre lieu (7) pour le nettoyage d'autres véhicules.

5. Dispositif d'aspiration selon l'une quelconque des revendications 1 à 4, caractérisé en ce qu'il comporte plusieurs bâtis (2) et systèmes d'adaptation (1) aux ouvertures de véhicules (5), raccordés à un seul bâti (9) et supportant un dispositif de ventilation (6) assurant le débit nécessaire à l'ensemble du dispositif d'aspiration.

6. Dispositif d'aspiration selon l'une quelconque des revendications 1 à 5 caractérisé en ce qu'il comprend un capteur (14) fixe placé à proximité du dispositif d'adaptation (1) aux ouvertures du véhicule (5), permettant d'identifier celui-ci grâce à toute balise embarquée qui lui est propre, et raccordé à toute unité centrale (18) de gestion déportée.

7. Dispositif d'aspiration selon la revendication 6 caractérisé en ce que ledit système de gestion (18) est raccordé également à tout autre dispositif (12, 13) de contrôle et d'opération d'entretien quotidien des véhicules (5) placé à proximité dudit bâti (2) et du système d'adaptation (1) afin de pouvoir effectuer plusieurs interventions sur le même véhicule en même temps et d'assurer le suivi de ce véhicule (5), dont les données et caractéristiques de toutes lesdites interventions sont stockées dans une mémoire de système de gestion (18).

8. Dispositif d'aspiration selon la revendication 7 caractérisé en ce qu'il comporte un écran d'information raccordé audit système de gestion (18) et qui affiche au conducteur dudit véhicule (5), lequel est identifié en arrivant au poste de nettoyage-entretien (19), des informations de gestion propres à ce véhicule et/ou des ordres de planification des opérations de maintenance à venir.

9. Dispositif d'aspiration selon l'une quelconque des revendications 7 et 8 caractérisé en ce que le système d'adaptation (1) est monté suspendu par rapport au bâti (2) afin de permettre un déplacement relatif dans le sens longitudinal du véhicule (5) pour bien centrer ce système (1) par rapport à l'ouverture (15) tout en assurant l'accès à d'autres dispositifs (12, 13) d'intervention sur d'autres points du véhicule (5).

10. Dispositif d'aspiration selon l'une quelconque des revendications 1 et 9 caractérisé en ce qu'il comporte au moins une tourelle orientable portant un dispositif de projection de jet d'air comprimé situé à l'intérieur et à poste fixe dans ledit véhicule (5) raccordé audit dispositif d'aspiration par le système d'adaptation (1) et commandé alors pour diriger le jet d'air vers les endroits d'accès difficile du véhicule.

## Claims

1. Flexible device for the automatic suction of a volume of air for cleaning vehicles which have at least two openings, comprising a suction system (1) able to surround at least one of the openings (15) of the vehicle (5) positioned on an operating site (19) and mounted on a frame (2) defining the end of a suction pipe (3) issuing vertically at the upper part of said frame (2) with a stop grid (16) for stopping slight and voluminous waste materials, and connected to a fan (6) through filters (10, 16), characterized in that said suction pipe (3) comprises a sleeve (17) passing over said site (19) and issuing in an enclosure (7) which is quite remote from that (4) where said site (19) is situated, said pipe (3) is then connected vertically to the upper part of a frame (19) receiving said fan (6) which rejects downwardly the air sucked in the vehicle (5).

2. Suction device according to claim 1, characterized in that the width of said device (2) and of the adapting system (1) is less than that of the technical strip (8) separating two vehicles (5) in any workshop (4) permitting daily technical maintenance operations on these vehicles.

3. Suction device according to any one of claims 1 and 2, characterized in that the enclosure (7) which receives the fan (6) is an isolated and closed enclosure with respect to the enclosure (4) where the vehicle (5) and the frame (2) supporting the end (1) are contained, said enclosure (7) being equipped with ventilation means (11) enabling evacuation of the sucked air.

4. Suction device according to any one of claims 1 to 3, characterized in that the fan (6) and its frame (9) are mounted in a mobile container, which can be connected to said pipe (3) for cleaning the vehicle (5), by suction operations, and disconnected in order to be transported and used on another site (7) for cleaning other vehicles.

5. Suction device according to any one of claims 1 to 4, characterized in that it comprises a plurality of frames (2) and systems (1) of adaptation to the openings of the vehicle (5), connected to only one frame (9) and supporting a fan (6) which ensures the flow necessary to the whole of the suction device.

6. Suction device according to any one of claims 1 to 5, characterized in that it comprises a fixed sensor (14) placed near the device (1) of adaptation to the openings of the vehicle (5), for identifying said vehicle owing to any on-board signalling device particular thereto, and connected to any off-set central control unit (18).

7. Suction device according to claim 6, characterized in that said control system (18) is also connected to any other device (12, 13) for the control and daily maintenance of vehicles (5) placed near said frame (2) and near said adaptation system (1) in order to be able to perform several operations at the same time on the same vehicle and to continue said vehicle (5), in which system the data and characteristics of all said operations are stored in a control system memory (18).

8. Suction device according to claim 7, characterized in that it comprises an information display screen connected to said control system (18) and which displays to the driver of the vehicle (5), which latter is identified upon arriving at the cleaning-maintenance station (19), control information particular to said vehicle and/or instructions for the planning of future maintenance operations.

9. Suction device according to any one of claims 7 and 8, characterized in that the suction system (1) is mounted in suspension with respect to the frame (2) in order to allow a relative displacement in the longitudinal direction of the vehicle (5) to center this system (1) accurately with respect to the opening (15) while ensuring access thereof to other devices (12, 13) for working on other points of the vehicle (5).

10. Suction device according to any one of claims 1 to 9, characterized in that it comprises at least a directionally adjustable turret carrying a device projecting jets of compressed air, situated inside and in fixed manner in said vehicle (5) connected to said suction device via the adaptation system (1) and then controlled so as to direct the jet of air towards the parts of the vehicle difficult to reach.

## Patentansprüche

1. Flexible Absaugvorrichtung zum globalen Absaugen eines Luftvolumens zum Reinigen von Fahrzeugen mit wenigstens zwei Öffnungen, welche umfaßt: ein Ansaugsystem (1), das wenigstens eine der Öffnungen (15) des an einer Bearbeitungsstätte (19) positionierten Fahrzeuge (5) umgeben kann und an einem Rahmen (2) montiert ist, der das Ende einer Saugleitung (3) begrenzt, die vertikal am oberen Bereich des Rahmens (2) mit einem Fanggitter für leichte und voluminöse Abfälle mündet, und mit einer Ventilationsvorrichtung (6) über Filter (10, 16) verbunden ist, **dadurch gekennzeichnet**, daß die Ansaugleitung (3) eine Hülse (17) umfaßt, die oberhalb der Bearbeitungsstelle (19) verläuft und an einem vom Ort (4) der Bearbeitungsstätte (19) entfernten Ort (7) mündet, wobei die Leitung (3) vertikal an den oberen Bereich eines Rahmens (9) angeschlossen ist, der die Ventilationsvorrichtung (6) aufnimmt, welche die im Fahrzeug (5) angesaugte Luft nach unten ausstößt.

2. Absaugvorrichtung nach Anspruch 1, dadurch gekennzeichnet, daß die Breite des Rahmens (2) und des Anpassungssystems (1) kleiner ist als die der technischen Längsteiler (8), die zwei Fahrzeuge (5) in einer Werkstatt (4) trennen, in der technische Eingriffe zur täglichen Wartung dieser Fahrzeuge durchgeführt werden können.

3. Absaugvorrichtung nach einem der Ansprüche 1 und 2, dadurch gekennzeichnet, daß der Ort (7), der die Ventilationsvorrichtung (6) aufnimmt, ein isolierter und gegen den Ort (4), an dem sich das Fahrzeug (5) und der Rahmen (2) zum Stützen des Endes (1) befinden, abgeschlosener Raum ist, der über eine Belüftung (11) verfügt, die die Abführung der angesaugten Luft ermöglicht.

4. Absaugvorrichtung nach einem der Ansprüche 1 bis 3, dadurch gekennzeichnet, daß die Ventilationsvorrichtung (6) und ihr Rahmen (9) in einem beweglichen Behälter montiert sind, der mit der Leitung (3) für die Arbeiten zur Reinigung des Fahrzeugs (5) durch Absaugen verbunden werden kann und getrennt werden kann, um zu einem anderen Ort (7) transportiert und dort zur Reinigung anderer Fahrzeuge benutzt zu werden.

5. Absaugvorichtung nach einem der Ansprüche 1 bis 4, dadurch gekennzeichnet, daß sie mehrere Rahmen (2) und Anpassungssysteme (1) zur Anpassung an Öffnungen von Fahrzeugen (5) umfaßt, die an einen einzigen Rahmen (9) angeschlossen sind und eine Ventilationsvorrichtung (6) tragen, die den notwendigen Durchsatz für die gesamte Absaugvorrichtung sicherstellt.

6. Absaugvorrichtung nach einem der Ansprüche 1 bis 5, dadurch gekennzeichnet, daß sie einen festen Meßaufnehmer (14) umfaßt, der in der Nähe der Anpassungsvorrichtung (1) zur Anpassung an die Öffnungen des Fahrzeugs (5) angebracht ist und es ermöglicht, dieses anhand einer ihm eigenen, an Bord befindlichen Markierung zu identifizieren, und der mit einer entfernten zentralen Verwaltungseinheit (18) verbunden ist.

7. Absaugvorrichtung nach Anspruch 6, dadurch gekennzeichnet, daß das Verwaltungssystem (18) außerdem mit einer anderen Vorrichtung (12, 13) zur Steuerung und Durchführung der täglichen Wartung von Fahrzeugen (5) in der Nähe des Rahmens (2) und des Anpassungssystems (1) verbunden ist, um mehrere Arbeiten an dem Fahrzeug gleichzeitig vornehmen zu können und Aufzeichnungen über das Fahrzeug (5) zu machen, dessen Daten und Merkmale bei allen genannten Eingriffen in einem Speicher des Verwaltungssystems (18) gespeichert werden.

8. Absaugvorrichtung nach Anspruch 7, dadurch gekennzeichnet, daß sie einen an das Verwaltungssystem (18) angeschlossenen Informationsbildschirm aufweist, der dem Fahrer des Fahrzeugs (5), das bei Ankunft an der Säuberungs-Wartungsstätte (19) identifiziert wird, auf dieses Fahrzeug bezogene Verwaltungsinformationen und/oder Anweisungen zur Planung der durchzuführenden Wartungsarbeiten anzeigt.

9. Absaugvorrichtung nach einem der Ansprüche 7 und 8, dadurch gekennzeichnet, daß das Anpassungssystem (1) bezüglich des Rahmens (2) hängend montiert ist, um eine relative Verschiebung in Längsrichtung des Fahrzeugs (5) zu ermöglichen, um das System (1) bezüglich der Öffnung (15) gut zu zentrieren und dabei den Zugriff auf andere Vorrichtungen (12, 13) zum Eingriff an anderen Punkten des Fahrzeugs (5) sicherzustellen.

10. Absaugvorrichtung nach einem der Ansprüche 1 bis 9, dadurch gekennzeichnet, daß sie wenigstens eine orientierbare Halterung umfaßt, die eine innerhalb an fester Stelle im Fahrzeug (5) angeordnete Vorrichtung zum Ausstoßen eines Druckluftstrahls trägt, die mit der Saugvorrichtung durch das Anpassungssystem (1) verbunden ist und gesteuert wird, um den Luftstrahl auf schwer zugängliche Orte des Fahrzeugs zu richten.
